# EUROPEAN PATENT APPLICATION

(11) **EP 4 711 127 A1**
(43) Date of publication of application: **18.03.2026**
(21) Application number: 24199877.2
(22) Date of filing: 11.09.2024
(51) Int. Cl.: B32B 5/26, D04H 1/46

(54) **AUTOMOTIVE SOUND ABSORBING TRIM COMPONENT**

(71) Applicant: Autoneum Management AG, 8406 Winterthur (CH)
(72) Inventor: MEENAKSHISUNDARAM, Meganathan, Morges (CH)

(57) **Abstract**

A sound-absorbing trim component comprising a porous fibrous resistive layer and a porous fibrous carrier layer laminated together wherein the Air Flow Resistance of the porous fibrous resistive layer is higher than the Air Flow Resistance of the porous fibrous carrier layer and the sound-absorbing trim component is obtained by a process comprising the following steps: depositing on an area of a first porous fibrous layer a second porous fibrous layer consisting of loose fibers, consolidate by needling the assembly consisting of the first and of the second porous fibrous layers and eventually thermoform the consolidated assembly so that, after the thermoforming process, the first porous fibrous layer forms the porous fibrous carrier layer and the second porous fibrous layer forms the porous fibrous resistive layer.

## Description

### Technical Field

The present invention relates to the field of automotive sound absorbing trim components.

### Background Art

Sound-absorbing trim components are well known and widely used in the automotive industry because of their ability to dissipate some of the acoustic energy carried by the sound waves that impinge on them. In their traditional construction, sound-absorbing automotive trim components may consist of multilayers in which the layer facing the impacting acoustic waves is porous, so as to allow the acoustic waves to penetrate into the interior of the component and thereby dissipate their energy, for example by viscous and/or thermal and/or structural dissipation mechanisms.

Broadly speaking, automotive sound-absorbing trim components may be divided into two categories: exterior and interior components.

Exterior sound absorbing trim components are those placed outside of the passenger compartment. These components can absorb the energy of the acoustic waves that are radiated by the vehicle's sound sources (e.g. the tires and/or the powertrain) towards the exterior and thus reduce the noise pollution generated by the vehicle itself. Typical examples may include bonnet liners and dash outer absorbers, which traditionally have as one of their primary functions to absorb the noise radiated by the powertrain. Other examples may concern wheelhouse outer liners and/or underbody shields comprising porous fibrous layers, which may help absorb noise radiated by tires and by powertrain.

Interior sound absorbing trim components are those placed inside the vehicle passenger compartment. These components can absorb the energy of the acoustic waves that are generated by the vehicle's sound sources and then transmitted into the passenger compartment, so to reduce the overall Sound Pressure Level (SPL) inside the passenger compartment itself and thus increase the passengers' acoustic comfort. Typical examples may include headliners and parcel shelves, which traditionally have as one of their primary functions to absorb the noise inside the passenger compartment. Other examples may be represented by multilayer dash inner sound insulators and/or by multilayer carpet sound insulators which may present, on the side facing the passenger compartment, one or more layers consisting of porous material/materials, which may confer to them a sound-absorbing function.

Usually, the performance of sound-absorbing automotive trim components is rather limited in the mid-low frequencies, for example below 2kHz. This is predominantly due to their limited thickness, which may often result from design constraints. For example, sound-absorbing underbody shields and outer wheel arch liners comprising fibrous layers typically need to be compressed to very thin thicknesses, to confer to them the rigidity needed to hold their shape and resist mechanical and/or aerodynamic loads. The same applies to parcel shelves and/or to headliners. In fact, all these sound-absorbing trim components typically have a thickness of less than 10mm, very often less than 5mm.

This lack of performance of sound-absorbing automotive trim components in the mid-low frequencies may be of concern for sound package and car manufacturers, since the mid-low frequency range, for example below 2kHz, may be very relevant both for exterior and for interior noise.

In order to overcome or at least to mitigate this problem, two kind of solutions traditionally adopted by sound package manufacturers.

A first solution consists in adding to the sound-absorbing trim component one or more additional patches of a sound-absorbing material. Here, a "patch" of sound absorbing material is a sound absorbing layer or multilayer having a substantially constant thickness and area weight. The position of these further patch or patches may vary from case to case. For example: in the case of a wheel-arch liner or underbody shield, sound absorbing patches are typically applied on the side of the component facing the vehicle body (i.e. the side opposite the one facing the tire), in order to protect them from mechanical and/or aerodynamic loads. On the other hand, in the case of an inner dash insulator, further sound absorbing patches are typically applied on the side facing the passenger compartment, so to expose them as much as possible to the sound-waves in the passenger compartment itself and then exploit their sound-absorbing capabilities in the most effective way.

This type of solution, while reasonable, can lead to a whole range of problems. First of all, it may require additional steps in the production process (necessary to apply, generally in a manual way, the sound-absorbing patch) and thus it may determine an increase in the complexity of the production process itself and of the cost of the part. Secondly, it inevitably requires additional packaging space, which may not always be available. Finally, it can lead to greater material waste, as the area where the patch is to be applied can have a very complex shape and thus result in considerable waste in production.

A second solution traditionally adopted by sound package manufacturers to increase sound-absorption performance in the low frequencies consists in applying a non-woven fabric or a micro-perforated foil with a controlled Air Flow Resistance (AFR) onto the surface of the sound-absorbing trim component which is exposed to the impinging sound waves which have to be absorbed. Such non-woven fabrics or micro-perforated foils are known in the field as "resistive porous screens". An example of such a solution is provided in EP2939828, wherein a microperforated foil is used to enhance the sound-absorption of sound-absorbing underbody shields (foil is added on the side facing the road) and/or wheel arch outer liners (foil is added on the side facing the tire). Another example of such a solution is provided in EP2159786, wherein a non-woven fabric with controlled AFR is used to enhance the acoustic absorption of a multilayer to be used for the manufacturing of interior sound-absorbing and sound-insulating automotive trim components.

However, even this second solution can present major problems. First of all, non-woven fabrics and micro-perforated foils may be difficult to mold properly in a three-dimensional shape, due to their inherent limitations in elongation properties. Furthermore, while the AFR is typically very well controlled in the non-woven fabric or in the micro-perforated foil as a semi-finished product, the control of this same quantity in the final sound-absorbing trim component after the molding may be extremely difficult, due to the unavoidable stretch during the moulding process, being the stretch rate different from place to place.

It is then the object of the present invention to provide an automotive sound-absorbing trim part with improved performance in the low frequencies, in particular below 2kHz, without incurring in the above-mentioned issues of the prior-art.

### Summary of invention

The object of the invention is achieved by an automotive sound-absorbing trim component according to claim 1.

In particular, the invention concerns a sound-absorbing trim component comprising a porous fibrous resistive layer and a porous fibrous carrier layer wherein the Air Flow Resistance of the porous fibrous resistive layer is higher than the Air Flow Resistance of the porous fibrous carrier layer and the sound-absorbing trim component is obtained by a process comprising the following steps:
- form a second porous fibrous layer by depositing loose fibers on an area of a first porous fibrous layer;
- consolidate by needling the assembly consisting of the first and of the second porous fibrous layer;
- thermoform the so consolidated assembly consisting of the first and of the second porous fibrous layer so that, after the thermoforming process, the first porous fibrous layer forms the porous fibrous carrier layer and the second porous fibrous layer forms the porous fibrous resistive layer.

A "layer" is a body consisting of one or more materials and comprised between two closely spaced surfaces, wherein the distance between the surfaces is substantially smaller than their dimensions. The two surfaces are indicated as the "sides" of the layer and they are opposite to each other. The distance between the two surfaces is indicated as the thickness of the layer, which may be variable. A layer may comprise other layers.

A "multilayer" is a sequence of layers, each having one side in common with another adjacent layer.

A "sound-absorbing component" is a component purposely designed for at least partially absorbing the acoustic energy carried by the acoustic waves impinging on it. Similarly, a "sound-absorbing material" is a material purposely conceived for absorbing sound.

Air Flow Resistance (AFR) is always intended to be measured according to ISO 9053-1:2018.

Thanks to the combination of a porous fibrous carrier layer and of a porous fibrous resistive layer having an AFR higher than that of the porous fibrous carrier layer itself, the sound absorbing trim part according to the invention may achieve excellent sound-absorption performance in the low frequencies, in particular below 2kHz.

Furthermore, and quite surprisingly, the sound-absorbing trim part according to the invention may present several advantages compared to prior-art solutions involving sound-absorption patches and/or resistive porous screens, thanks to the specific features of the porous fibrous resistive layer obtained by initially depositing on top of a first porous fibrous layer (hereafter also referred as "substrate layer") a second porous fibrous layer consisting of loose fibers and, at a later stage, thermoforming it.

First, the loose fibers may be deposited on the substrate layer only locally and in pre-determined areas, so to form, in the final thermo-formed sound-absorbing trim part, the porous resistive layer only in those regions where this is desired and actually needed. This is possible even when these regions have a very complex three-dimensional shape, without incurring in any increase of production process waste, as it may happen with additional sound-absorbing patches and/or resistive porous screens used in the prior-art.

Furthermore, the quantity and/or area weight of the loose fibers deposited onto the substrate layer may be adjusted locally, depending on the performance and/or design constraints. For example, in certain areas of the substrate layer a higher quantity of loose fibers may be deposited in such a way to obtain in that same area, in the final thermo-formed sound-absorbing trim part, a denser porous fibrous resistive layer with a higher AFR. In general, by varying the area weight and/or quantity of the loose fibers deposited on the substrate layer it is possible to adjust locally the AFR of the porous fibrous resistive layer in the final thermo-formed sound absorbing trim part. This is an advantage compared to sound-absorption patches and/or resistive porous screens in the art, which do not allow a local control of the AFR.

In addition, the porous fibrous resistive layer according to the invention is a direct result of the thermo-forming process, without the need of further process steps like in the case of sound-absorbing patches, wherein further process steps are needed to apply, typically in a manual way, the sound-absorbing patch to the carrier layer.

All the above shows that, thanks to the claimed process steps, the porous fibrous resistive layer according to the invention is adjustable in terms of position and/or area weight profile according to performance and/or design needs and it may lead also to a simplification of the production process. All features that may not be obtained with prior-art solutions such as additional sound-absorbing patches and/or resistive porous screens.

Preferably, the porous fibrous resistive layer according to the invention covers only a pre-determined portion of the surface of the porous fibrous carrier layer according to the invention, e.g., a portion of the surface of the porous fibrous carrier layer which is known to be particularly exposed to the noise radiated by a sound source.

Preferably, the area weight and the AFR of the porous fibrous resistive layer according to the invention is variable over its surface.

Thanks to the fact that the AFR of the porous fibrous resistive layer according to the invention is higher than that of the porous fibrous carrier layer, the sound-absorbing trim part according to the invention may achieve excellent sound-absorbing performance in the mid-low frequencies, in particular below 2kHz. In order to enhance this effect, the Air Flow Resistance of the porous fibrous resistive layer according to the invention is preferably at least 200% of the Air Flow Resistance of the porous fibrous carrier layer, more preferably at least 300%, even more preferably at least 500%.

Surprisingly, it is possible to obtain the desired porous resistive layer according to the invention already with a very limited thickness and area weight. The porous fibrous resistive layer according to the invention has a thickness of preferably less than 5mm, more preferably less than 3mm and even more preferably less than 2mm. The area weight of the porous fibrous resistive layer is preferably comprised between 200g/m² and 1400grams/m², more preferably between 300grams/m² and 1000grams/m², even more preferably between 450grams/m² and 750grams/m²

The second porous fibrous layer consists of "loose fibers", in the sense that it consists of fibers that are in no way linked or bonded to each other and that may be separated from each other under the action of simple gravity, so that they may be deposited on the first porous fibrous layer or substrate layer in a way similar to what is commonly done, e.g., when depositing a powder on a transporting means. In the sound-absorbing trim part according to the invention, the second porous fibrous layer consisting of loose fibers is the precursor of the porous fibrous resistive layer according to the invention, in the sense that the latter is obtained from the former by first needling it to the substrate layer and then by thermo-forming. Therefore, the fibers included in the second porous fibrous layer and in the porous fibrous resistive layer are essentially the same, as well as their properties such as material, length etc. In what follows, these properties will be referred to one or the other layer based on convenience.

Preferably, the second porous fibrous layer according to the invention (hereafter called also "layer of loose fibers according to the invention") essentially consists of staple fibers having a length of 40mm or less, even more preferably 30mm or less. In fact, the use of shorter fibers may facilitate the depositing process. Furthermore, with shorter fibers it is easier to adjust the area weight and/or thickness profile of the layer of loose fibers in case it is desired to obtain a porous fibrous resistive layer with variable area weight and/or thickness over its surface. Shorter fibers may also improve the compressibility of the layer of loose fibers during the thermo-forming process.

Furthermore, the layer of loose fibers according to the invention preferably comprises micro-fibers. It is known that the presence of micro-fibers in the porous fibrous resistive layer according to the invention may enhance its Air Flow Resistance, thanks to their high surface/volume ratio for a fixed area weight. Micro-fibers are fibers with a diameter of 12microns or less. Fiber diameter may be determined, e.g., by image-processing techniques applied to micro-scopic images of the fibers obtained by means of optical microscopy or scanning electron microscopy.

Preferably, the second porous fibrous layer according to the invention (as well as the porous fibrous resistive layer according to the invention) comprises between 30% and 90% of micro-fibers, more preferably between 50% and 80% of micro-fibers and even more preferably between 60% and 75% of micro-fibers. The percentage of micro-fibers comprised in the layer of loose fibers may be measured, as mentioned above, by image-processing techniques applied to micro-scopic images of the fibers obtained by means of optical microscopy or scanning electron microscopy. For the evaluation of the percentage of micro-fibers comprised in the layer of loose fibers, a statistically relevant number of fibers should be considered, for example at least 100 fibers.

A layer of loose fibers according to the invention and entirely consisting of micro-fibers is not preferable, since this may favor the formation of neps and then lead to problems in the process of formation of the loose fibers.

The porous fibrous resistive layer according to the invention may in principle comprise any kind of natural and/or synthetic fibers common in the industry. Examples of natural fibers are cotton, wool, flax, hemp, bamboo, sisal, jute, and abaca fibers. Examples of synthetic fibers are polypropylene fibers, polyethylene fibers, polyester fibers, for instance polyethylene-terephthalate (PET) fibers, polylactic acid (PLA) fibers and polyamide (PA) fibers, in particular polyamide 6 or polyamide 6.6 fibers. Synthetic fibers may be mono-component or bicomponent fibers. Mono-component fibers are made from a single material, while bicomponent fibers are synthetic fibers made from two polymers of different chemical and/or physical structure that are tightly connected to each other along the fiber length. Bicomponent fibers may be produced using processes known in the art, e.g. by melt spinning. In this process, the polymers are spun by a spinneret into a fiber either next to each other (side-by-side configuration) or around each other (core-sheath configuration) or in a mixture with an inhomogeneous distribution (island-in-the-sea or segmented-pie configuration).

A particular type of bicomponent fibers is represented by splittable fibers. In these, the two polymers composing the fiber are spun so to create in the fiber section a circumferential sequence of wedge-shaped radial segments next to each other (so-called "pie-wedge" configuration), wherein the two polymers are alternated from one segment to the next. These fibers are called "splittable" since the different segments may effectively be separated from each other under some kind of mechanical action. Commonly, in the prior-art hydroentangling jets are used for this purpose.

In addition, the fibers comprised in the porous fibrous resistive layer according to the invention can have cross-sections of various shapes, e.g., round or trilobal. Always in relation to their cross-section, the fibers may be hollow or solid, wherein the cross-section of a hollow fiber presents an internal cavity, so that a hollow fiber has a tube-like structure, while the cross-section of a solid fiber is completely filled by the material or materials constituting the fiber.

The porous fibrous resistive layer may consist of only one single kind of fibers but it may also be a homogeneous mix of fibers of different kinds. Advantageously, the fibers of porous fibrous resistive may be at least partially of a recycled nature.

The loose fibers according to the invention may advantageously be obtained and deposited onto the substrate layer by means of the process or processes described in EP2695976 and in EP3450603. This process starts from one or more pre-carded slivers of fibers, obtained from an initial mixture of staple fibers with standard carding processes known in the art. Within each carded sliver, the staple fibers are held together by inter-fiber friction forces and they are not "loose" in the above-described sense. The slivers are fed into a feeding device comprising different feeding segments, each receiving one fiber sliver. Each feeding segment comprises a feed roller and an opening roller. The feed roller draws off the respective fiber sliver. The fiber sliver moved by the feed roller is then transported to the opening roller. The feed roller and the opening roller are preferably driven in the same sense of rotation. The feed roller has a set with teeth projecting backwards with respect to the direction of rotation of the feed roller. On the other hand, the opening roller preferably has a set with teeth that protrude forward with respect to the direction of rotation, so to open fibers of the fiber sliver particularly well, so that fiber flakes or even fine fibers are detached from each other and the fibers are rendered loose in the above-described sense. These loose fibers then fall into a corresponding discharge chute and from there they may be guided onto a substrate layer positioned on a transporting means (e.g. a conveyor belt) located underneath the feeding device. By arranging different feed segments comprised in the feeding device along the width of the substrate layer, it is possible to distribute the loose fibers at any desired position over such layer. Furthermore, as described EP2695976 and in EP3450603, by equipping the feeding device with devices to measure the amount of fibers discharged by each feeding segment, it is possible to measure the area weight of the loose fibers deposited by each feed segment, thereby enabling the possibility of adjusting the area weight profile of the deposited layer of loose fibers.

When the above-described process is used, the staple fibers in the initial fiber mixture used to form the carded slivers preferably have a length comprised between 40mm and 70mm, more preferably between 45mm and 55mm.

Furthermore, when the above-described process is used, the initial mixture of staple fibers used to form the carded slivers preferably comprises splittable fibers. Surprisingly, it was found that when the initial mixture of staple fibers comprises splittable fibers, these may effectively be split into finer fibers along the process, either during the initial carding steps for obtaining the slivers and/or thanks to the action of the opening rollers in the feeding segments. In this way, with the use of splittable fibers, the throughput and processing advantages of coarser fibers are maintained and, at the same time, a substantial amount of much finer fiber in the layer of loose fibers according ot the invention is obtained.

Advantageously, the splittable fibers are hollow splittable fibers, since the hollow section makes the splitting of the fibers easier. Advantageously, the splittable fibers have a diameter of 30 microns or less, more preferably a diameter of 20microns or less. Preferably, they have at least 8 segments, more preferably at least 16 segments. The smaller is the diameter of the splittable fibers and/or the higher is the number of segments comprised in their section, the finer are the fibers obtained after the splitting process.

In a preferred embodiment, the initial fiber mixture comprises 80% by weight of hollow PP/PET splittable fibers, with a fineness of 3.3dtex and with a section segmented in a pie-wedge fashion and comprising 16 segments. By using this kind of splittable fibers, a considerable amount of micro-fibers may result to be comprised in the layer of loose fibers.

The first porous fibrous layer or substrate layer according to the invention (as well as the porous fibrous carrier layer formed from it after the thermo-forming process) may comprise any kind of natural and/or synthetic fibers common in the industry. Examples of natural fibers are cotton, wool, flax, hemp, bamboo, sisal, jute, and abaca fibers. Examples of synthetic fibers are polypropylene fibers, polyethylene fibers, polyester fibers, for instance polyethylene-terephthalate (PET) fibers, polylactic acid (PLA) fibers and polyamide (PA) fibers, in particular polyamide 6 or polyamide 6.6 fibers. Synthetic fibers may be mono-component or bicomponent fibers. Mono-component fibers are made from a single material, while bicomponent fibers are synthetic fibers made from two polymers of different chemical and/or physical structure that are tightly connected to each other along the fiber length. Bicomponent fibers may be produced using processes known in the art, e.g. by melt spinning.

The first porous fibrous layer may consist of only one single kind of fibers but it may also be a homogeneous mixture of fibers of different kinds.

Advantageously, the fibers of the first porous fibrous layer may be at least partially of a recycled nature, in order to reduce the environmental impact of its manufacturing process, for what concerns specifically material consumption. In particular, the first porous fibrous layer may comprise shoddy natural fibers, for example shoddy cotton, or shoddy synthetic fibers, for example shoddy polyester. A shoddy type of fibers is here defined as comprising at least 51% by weight of recycled fibers the concerned material. So for instance, shoddy cotton contains at least 51% by weight of recycled cotton fibers, being the remaining 49% by weight is constituted by fibers of a different material and/or by virgin fibers.

The first porous fibrous layer preferably comprises a binder, preferably in an amount comprised between 10% and 50% by weight. A binder may improve the mechanical consistence of the sound-absorbing trim component according to the invention so that it can be easily handled during the production process and/or the installation process on the vehicle. The binder may be of a thermoset or of a thermoplastic nature. In both cases, some kind of thermal treatment is needed in order to activate it. A thermoset binder is preferably in the form of an epoxy resin or a phenolic resin or a mixture of both. A thermoplastic binder is preferably in the form of thermoplastic binder fibers. These are fibers comprising at least one portion which melts as a result of a thermal treatment, forming droplets that bind all the other fibers at their crossing/contact points. The melting temperature of the binder fibers (or the portion of the binder fibers that melts) must obviously be lower than that of all the other fibers (and of the portion of the binder fibers that possibly does not melt). Binder fibers may be mono-component or bicomponent fibers. Examples of mono-component thermoplastic binder fibers are low-melt PET fibers, low-melt PBT fibers or PP fibers. When these fibers are used as binder, the whole binder fiber melts during thermal treatment as described above. Examples of bicomponent thermoplastic binder fibers are bicomponent core-sheath binder fibers, wherein one of the two components (the sheath) surrounds the other (the core). The sheath component is the only part of the fiber that melts during thermal treatment as described above. Also in the bicomponent core-sheath binder fibers the first polymer is preferably polyethylene terephthalate (PET) or polybutylene terephthalate (PBT) and the second polymer is a copolymer of polyethylene terephthalate (coPET) or a copolymer of polybutylene terephthalate (coPBT).

The first porous fibrous layer may be obtained from a given fiber mixture by means of a production line (often referred to in the art as a non-woven formation line) comprising a series of steps in a fixed sequence which may include, among others, feeding bale openers with bales of fibers, opening of the fibers, mixing of the fibers, carding, cross lapping, vertical lapping, horizontal lapping, needling and/or heating in an oven for partial consolidation. At the end of the non-woven formation process, the first porous fibrous layer is formed as a continuous and partially consolidated layer of fibers, which can be easily handled and transported for production purposes.

Once the second porous fibrous layer consisting of loose fibers is formed on the first porous fibrous layer or substrate layer, the two layers are needled together by means of one or more needling looms, as known in the art. Care should be taken to choose the needling parameters, e.g., the needling density and the penetration depth so that, thanks to the needling, the fibers of the second porous fibrous layer are all mechanically bound to the first porous fibrous layer. Preferably, the needling is performed from both sides of the assembly consisting of the first and second porous fibrous layers.

The needling process step is essential, since it fixes the loose fibers to the first porous fibrous layer. What is so obtained at the end of the needling process step is a semi-finished product which may be easily handled and transported, e.g., to be conveniently used for a moulding process, e.g., a thermo-forming process.

Furthermore, it was surprisingly found that when the initial fiber mixture used for the production of the second fibrous layer comprises splittable fibres, the needling operation may contribute to the splitting of any residual splittable fibers still present as non-split in the second porous fibrous layer consisting of loose fibers.

Quite advantageously, the semi-finished product obtained at the end of the above-described needling operations may be thermo-formed according to processes well-known in the art, such as cold-moulding or hot moulding or steam moulding, without taking any special precautions as a result of the specific process used to obtain the semi-finished product..

Preferably, to further enhance its effect on the performance of the sound-absorbing component according to the invention, the porous fibrous resistive layer according to the invention is substantially directly exposed to acoustic waves impinging on the sound-absorbing trim component itself. Herein "substantially directly exposed" means that the porous fibrous resistive layer may be covered by one or more layers which have a negligible impact on the sound-absorbing performance of the trim part, such as a decorative thin fabric with an AFR which is negligible compared to the AFR of the porous fibrous resistive layer. Even more preferably, the porous fibrous resistive layer according to the invention has preferably one side which is comprised in the outer surface of the sound-absorbing trim component. In this case, the improvement in sound-absorption performance guaranteed by the porous fibrous resistive layer is further enhanced.

However, it is important to observe that the porous fibrous resistive layer according to the invention may be comprised in the sound-absorbing trim component according to the invention also as an internal layer. Even then, the porous fibrous resistive layer according to the invention helps improve the sound absorption of the sound absorbing trim component in the mid-low frequencies, wherein the improvement may depend on the specific circumstantce, e.g. on the thickness and/or AFR of the porous fibrous resistive layer layer.

In a preferred embodiment, the sound-absorbing trim part according to the invention is a wheel-house outer liner, i.e., the trim component that covers the vehicle body wheel-house, which is the part of the vehicle body that delimits a receiving area for a vehicle wheel. Typically, a wheel-house outer liner is in the form of a shell which conforms to the body-in-white wheel-house and is attached to it with fastening means such as plastic or metal clips. Generally, the wheel-house outer liner is shaped and installed in such a way to keep, at least on most of its surface, a certain distance (often referred to as "air-gap") to the body-in-white. Such an air-gap may generally vary between 1-2mm and 20-25mm.

In this embodiment as a wheel-house outer liner, the sound-absorbing trim part according to the invention may comprise, besides the porous fibrous carrier layer and the porous fibrous resistive layer according to the invention, also decorative layers such as decorative fabrics and/or carpets, in particular on the side facing the tire. In addition, it may also comprise other ancillaries such as plastic/rubber speed-lips and/or local metal patches for thermal protection of specific areas. However, preferably, it does not comprise any further layer aimed at substantially contributing to sound-absorption performance.

Furthermore, in this embodiment the porous fibrous resistive layer according to the invention preferably is positioned on the side of the carrier layer facing the body-in-white. Even more preferably, such porous fibrous resistive layer is positioned as close as possible to the tire contact patch, i.e., the region of the tire where it is in contact with the ground. In fact, it is known that most of the noise radiated by the tire is generated in proximity of its contact patch. Therefore, by positioning the porous fibrous resistive layer close to the tire contact patch, its effectiveness may be maximized.

From all the above it appears that in this embodiment as a wheel-house outer liner, the sound-absorbing trim part according to the invention is very simple, consisting essentially only of the porous fibrous carrier layer and of the porous fibrous resistive layer, preferably applied only locally. Such a configuration is much simpler and easier to produce compared, e.g., to prior-art wheel-house outer liners with additional sound-absorbing patches.

In another preferred embodiment, the sound absorbing trim part according to the invention is a dash inner. The dash inner is the sound-attenuating trim part applied on the body in white firewall, i.e., the partition that separates the passenger compartment from the front compartment where the engine or the e-motor is positioned.

In this embodiment, the porous fibrous resistive layer according to the invention is preferably arranged on the side of the porous fibrous carrier layer that faces the passenger compartment, in such a way to better contribute to the absorption of the acoustic waves present in it and thus reduce the Sound Pressure Level in the passenger compartment itself.

Always in this embodiment as a dash inner, the sound-absorbing trim part according to the invention may comprise, besides the porous fibrous carrier layer and the porous fibrous resistive layer according to the invention, also other layers such as further porous layers and/or decoupling layers and/or acoustic barrier layers, arranged on the side of the porous fibrous carrier layer facing the body-in-white. For example, it may comprise a decoupling layer and a polymeric film interposed between the decoupling layer and the porous fibrous carrier layer, wherein the decoupling layer may be either a porous fibrous layer or an open-cell foam. The side of the decoupling layer opposite the one facing the carrier layer is to be put, at least partially, in contact with the vehicle body in white. The material and the thickness of the decoupling layer shall be chosen in such a way to minimize, compatibly with design constraints, the transmission of vibration from the vehicle body in white itself.

The embodiments described here above for the sound-absorbing trim component according to the invention represent just examples. By considering the constructions and the features of the materials here above described, in particular their nature, density, thickness, area weight, AFR, the person skilled in the art may easily derive from these embodiments further embodiments and/or applications of the sound-absorbing trim part according to the invention, for example as a parcel shelf, a trunk side trim, a carpet trim, a trunk load floor.

In addition to this, further embodiments of the trim component according to the invention may be derived from the description also by combining the different embodiments and examples of the invention and may be also derived from the description of the embodiments shown in the figures. The figures are schematic and not necessarily in scale. Ranges include endpoints.

### Brief description of drawings

Figure 1 shows an embodiment of the sound-absorbing trim part according to the invention as a wheel-house outer liner.
Figure 2 shows a comparison between the sound-absorption coefficient of a sound absorbing trim part according to the invention and that of sound-absorbing trim parts belonging to the state of the art.

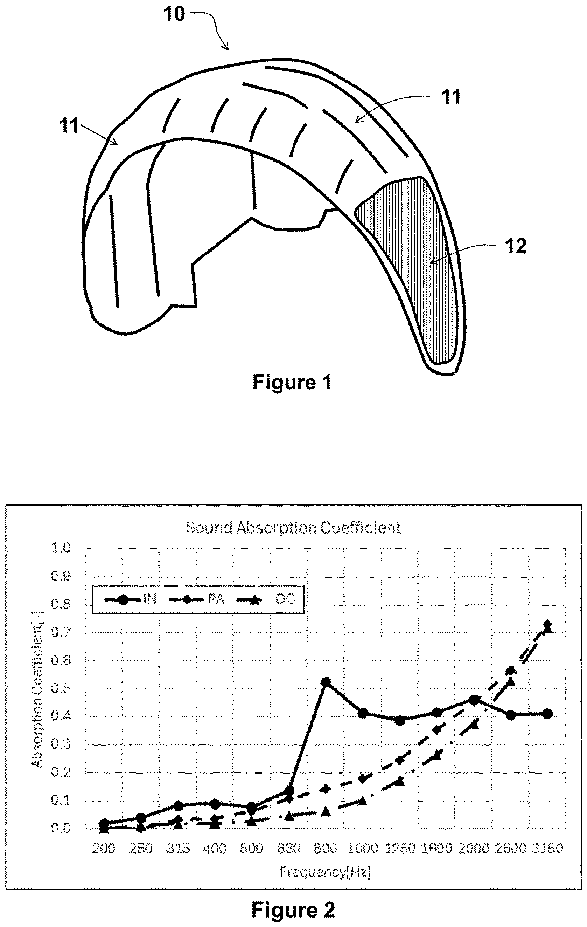

Figure 1 shows a sound-absorbing trim part (10) according to the invention in the form of a wheel-house outer liner. This part has a very simple design. It consists of a porous fibrous carrier layer (11) and of a porous fibrous resistive layer (12). The porous fibrous resistive layer (12) is arranged on the side of the porous fibrous carrier layer (11) which faces the body-in-white when the part is installed on the car. Furthermore, the porous fibrous resistive layer (12) is advantageously positioned in the area of the wheel-house outer liner (10) that is close to the tire contact patch when the part is installed on the vehicle.

A sound-absorbing trim part according to the invention (hereafter labelled as "IN") was produced in the following way. A fiber mixture consisting of 80% by weight of PP/PET hollow splittable staple fibers having a length of approximately 51mm, and a fineness of 3.3dtex and 20% by weight of solid staple PET fibers having a length of approximately 38mm and a fineness of about 1.7dtex was considered. The splittable fibers had a "pie-wedge" section with 16 radial sectors, an inner diameter of about 4.2microns and an outer diameter of about 19.5microns. The solid PET fibers had a diameter of about 12.5microns.

Pre-carded slivers were formed from this fiber mixture using standard carding methods and, by means of the process previously described, a layer of loose fibers obtained from this fiber mixture was deposited on a substrate layer. The substrate layer consisted of a porous fibrous layer consisting of about 60% by weight of PET fibers and about 40% by weight of binder PP fibers, had a thickness of about 8mm and an area weight of about 1000grams/m².

During the deposition process, the layer of loose fibers was adjusted to have an area weight of about 400grams/m² and a thickness of about 3.5mm. From the analysis of microscopic images taken on the layer of loose fibers, it was possible to verify that more than 60% of the fibers had a diameter of 10microns or less, indicating that, during the process, a vast majority of the splittable fibers were advantageously split into micro-fibers. Furthermore, direct measurements of the length of the fibers indicated that the layer of loose fibers consisted essentially of fibers having a length of about 35mm or less, which is also advantageous for the fiber deposition process.

The assembly consisting of the substrate layer and of the layer of loose fibers was then needled in order to provide mechanical consistency to the assembly itself.

The resulting needled semi-finished product was then molded into a wheel-house outer liner using a standard cold-moulding process. As a result of the cold-mou

Iding process, the substrate layer formed the porous fibrous carrier layer according to the invention, while the layer of loose fibers formed the porous fibrous resistive layer according to the invention.

Three circular samples having a diameter of 100mm were cut from three different positions over the surface of the wheel-house outer liner according to the invention. Their area weight, thickness and AFR were measured and resulted to be respectively 1230+/-30 grams/m², 3.7+/- 0.1mm and 3393+/-95 Ns/m³, wherein the values represent the average over the 3 positions/samples and the uncertainties represent the corresponding standard deviation.

For comparative purposes, a second wheel-house outer liner was produced (hereafter labelled as "OC"), applying the same cold-moulding process only to the substrate layer, so to obtain a wheel-house outer liner formed only by the porous fibrous carrier layer. The area weight, the thickness and the AFR of the wheel-house outer liner so obained were measured as previously described for the wheel-house outer liner "IN" according to the invention and turned out to be respectively 680+/-28 grams/m², 2.7+/-0.2mm and 257+/-10 Ns/m³.

From these data it appears that:
- the presence of the porous fibrous resistive layer according to the invention can limit the decrease of area weight due to the stretch occurring during the cold-moulding process. In fact, for the wheel-house outer liner IN according to the invention the decrease in area weight is from about 1400grams/m² to about 1230grams/m², i.e., only about 14%. On the other hand, for the wheel-house outer liner OC consisting only of the carrier layer, the decrease in area weight is from about 1000grams/m² to about 680grams/m², i.e. about 32%;
- the presence of the porous fibrous resistive layer according to the invention increases the total thickness of the part by only about 1mm;
- the presence of the porous fibrous resistive layer according to the invention determines a very substantial enhancement in the AFR, increasing it by about an order of magnitude.

Always for comparative purposes, a third wheel-house outer liner (hereafter labelled as "PA") was produced. This was obtained by taking a wheel-house outer liner consisting of only the porous fibrous carrier layer (same as "OC") and manually applying on the side intended to face the vehicle body-in-white a patch of sound-absorbing material having an area weight of about 250grams/m², a thickness of about 12mm and consisting of 65% by weight of PP fibers and 35% by weight of PES fibers. Such an absorber is often used in prior-art wheel-house outer liners to increase low-frequency absorption.

The sound-absorption coefficient of the three wheel-house outer liners was measured by means of an impedance tube and following the standard ISO 10534-1:1996. For each wheel-house outer liner, the sound-absorption coefficient was measured on 3 samples having a diameter of 60mm, cut from the center of the 100mm-diameter samples previously used for AFR tests. The sound absorption coefficient was always measured "from the road side", i.e., with the road-side of the wheel-house outer liner sample facing the tube loudspeaker, since this is the side facing the sound source (the tire) when the wheel-house outer liner is installed on the vehicle.

Samples obtained from the wheel-house outer liner "PA" consisting only of the porous fibrous carrier layer were installed in the impedance tube leaving an air-gap of about 12mm between their body-in-white side and the tube rigid end. This kind of installation intends to represent the actual in-vehicle installation conditions of wheel-house outer liners wherein, as previously mentioned, an air-gap is normally left between the part and the body-in-white.

Samples obtained from the "PA" wheel-house outer liner were installed with the body-in-white side of the wheel-house outer liner in contact with the tube rigid end. Given that the thickness of the sound-absorbing patch was about 12mm, the position in the impedance tube of the porous fibrous carrier layer resulted to be the same as that for the above-mentioned samples obtained from the "OC" wheel-house outer liner.

Eventually, samples obtained from the "IN" wheel-house outer liner according to the invention were installed with an air-gap of about 11mm between their body-in-white side and the tube rigid end. Given that the thickness of the porous fibrous resistive layer comprised in these samples was about 1mm, the position in the impedance tube of the porous fibrous carrier layer resulted -again- to be the same as that for the above-mentioned samples obtained from the "OC" wheel-house outer liner.

Therefore, for all samples care was taken that the relative position between the porous fibrous carrier layer and the tube loudspeaker (i.e., the source of noise) was the same, in order to have a fair comparison. This is meant to represent the situation in which the three wheel-house outer liners are installed in the same position on the vehicle, relative to the source of noise (i.e., the tire) they intend to couteract.

Figure 2 shows the comparison between the sound-absorption coefficient obtained for the three wheel-house outer liners, on the frequency range between 200Hz and 3.15kHz in third-octaves. Each curve represents an average over the three samples cut from the respective wheel-house outer liner. As one can see, the improvement obtained with the wheel-house outer liner according to the invention (curve labelled "IN") with respect to the one consisting of only the porous fibrous carrier (curve labelled "OC") is substantially better than that obtained with the application of the sound absorbing patch (curve labelled "PA"), in particular in the frequency range below 2kHz and even more in particular in the frequency range between 800Hz and 1250Hz, which is known to be the most relevant one for tire noise radiation.

## Claims

1. A sound-absorbing trim component (10) comprising a porous fibrous resistive layer (12) and a porous fibrous carrier layer (11), wherein the Air Flow Resistance of the porous fibrous resistive layer (12) is higher than the Air Flow Resistance of the porous fibrous carrier layer (11) and the sound-absorbing trim component (10) is obtained by a process comprising the following steps:
- form a second porous fibrous layer by depositing loose fibers on an area of a first porous fibrous layer;
- consolidate by needling the assembly consisting of the first and of the second porous fibrous layers;
- thermoform the consolidated assembly so that, after the thermoforming process, the first porous fibrous layer forms the porous fibrous carrier layer and the second porous fibrous layer forms the porous fibrous resistive layer.

2. Sound-absorbing trim component (10) according to claim 1 **characterized in that** the Air Flow Resistance of the porous fibrous resistive layer (12) is at least 200% of the Air Flow Resistance of the porous fibrous carrier layer (11), preferably at least 300%, more preferably at least 500%.

3. Sound absorbing trim component (10) according to claim 1 or 2 **characterized in that** the porous fibrous resistive layer (12) has a thickness of less than 5mm, preferably less than 3mm, more preferably less than 2mm.

4. Sound absorbing trim component (10) according to any of the preceding claims, **characterized in that** the area weight of the porous fibrous resistive layer (12) is comprised between 200grams/m² and 1400grams /m², preferably between 300grams /m² and 1000grams/m², more preferably between 450grams /m² and 750grams/m².

5. Sound absorbing trim component (10) according to any of the preceding claims, **characterized in that** the porous fibrous resistive layer (12) essentially consists of staple fibers having a length of 40mm or less, preferably 30mm or less.

6. Sound absorbing trim component (10) according to any of the preceding claims, **characterized in that** the porous fibrous resistive layer (12) comprises micro-fibers, preferably between 40% and 90% of micro-fibers, more preferably between 50% and 80% of micro-fibers and even more preferably between 60% and 75% of micro-fibers.

7. Sound absorbing trim component (10) according to claim 6, **characterized in that** at least a portion of the micro-fibers comprised in the porous fibrous resistive layer (12) is obtained by splitting splittable fibers into finer fibers.

8. Sound absorbing trim component (10) according to any of the preceding claims, **characterized in that** the porous fibrous resistive layer (12) and/or the porous fibrous carrier layer (11) comprises natural fibers such as cotton fibers, wool fibers, flax fibers, hemp fibers, bamboo fibers, sisal fibers, jute fibers, abaca fibers and/or synthetic fibers such as polypropylene fibers, polyethylene fibers, polyester fibers, for instance polyethylene-terephthalate (PET) fibers, polylactic acid (PLA) fibers, polyamide (PA) fibers, in particular polyamide 6 or polyamide 6.6 fibers.

9. Sound absorbing trim component (10) according to any of the preceding claims, wherein the porous fibrous carrier layer (11) and/or the porous fibrous resistive layer (12) comprise recycled or reclaimed fibers.

10. Use of a sound-absorbing trim part (10) according to any of the preceding claims as an automotive wheel-house outer liner or as an automotive dash-outer absorber, or as an automotive dash inner or as an automotive parcel shelf or as an automotive trunk side trim or as an automotive trunk load floor.

11. Method for producing a sound-absorbing trim part (10) according to any of the preceding claims and comprising the following steps:
(a). provide a mixture of splittable staple fibers and solid staple fibers;
(b). obtain a plurality of pre-carded slivers from said mixture so that during the pre-carding operations a first portion of the splittable fibers are split into finer fibers;
(c). feed the slivers into a feeding device comprising different feeding segments, each receiving one fiber sliver, wherein each feeding segment comprises a feed roller and an opening roller, wherein the feed roller and the opening roller are driven in the same sense of rotation and wherein the feed roller has a set with teeth projecting backwards with respect to its direction of rotation and the opening roller has a set with teeth that protrude forward with respect to its direction of rotation;
(d). in each feed segment, transport the respective sliver by means of the feed roller to the opening roller and open the fibers by means of the opening roller, so to detach the fibers from each other and render them loose and split a second portion of the splittable fibers into finer fibers;
(e). collect the so-obtained loose fibers in a discharge chute;
(f). discharge the loose fibers onto an area of a first porous fibrous layer positioned on a transporting means located underneath the discharge chute, so to form on it a second porous fibrous layer consisting of the loose fibers;
(g). consolidate by needling the assembly consisting of the first and of the second porous fibrous layers;
(h). thermoform the consolidated assembly, for example by cold-moulding, so that, after the thermoforming process, the first porous fibrous layer forms the porous fibrous carrier layer and the second porous fibrous layer forms the porous fibrous resistive layer.

12. Method according to claim 11, wherein the feeding device is equipped with measuring devices for measuring the amount of loose fibers deposited by each feed-segment onto the first porous fibrous layer.

13. Method according to claim 11 or 12 wherein the mixture of splittable fibers and solid fibers consists of about 20% of solid staple PET fibers having a fineness of 1.7dtex and about 80% by weight of PP/PET hollow splittable fibers with a fineness of 3.3dtex and a pie-wedge section subdivided into 16 radial segments.
